(19) Europäisches Patentamt / European Patent Office / Office européen des brevets

(11) **EP 3 079 218 A1**

(12) **EUROPEAN PATENT APPLICATION**
published in accordance with Art. 153(4) EPC

(43) Date of publication:
**12.10.2016 Bulletin 2016/41**

(51) Int Cl.:
*H02J 7/00* (2006.01)  *H02J 50/10* (2016.01)
*H02J 7/04* (2006.01)  *H04B 5/00* (2006.01)

(21) Application number: **13898623.7**

(22) Date of filing: **02.12.2013**

(86) International application number:
**PCT/JP2013/082391**

(87) International publication number:
**WO 2015/083223 (11.06.2015 Gazette 2015/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventors:
• **SHIMOKAWA, Satoshi**
**Kawasaki-shi**
**Kanagawa 211-8588 (JP)**

• **UCHIDA, Akiyoshi**
**Kawasaki-shi**
**Kanagawa 211-8588 (JP)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(54) **POWER RECEPTION APPARATUS, POWER TRANSMISSION APPARATUS, AND WIRELESS POWER SUPPLY SYSTEM**

(57) A power receiver includes a power receiver coil, a secondary battery, a load resistor, a switch, and a power receiver controller. The power receiver coil is configured to wirelessly receive power from a power source, and the secondary battery is configured to be charged by power from the power receiver coil. The switch is configured to selectively connect the power receiver coil to the secondary battery or the load resistor, and the power receiver controller is configured to control the switch in accordance with a power supply state of the power source based on the power receiver coil, and a charged state of the secondary battery.

FIG. 4A

**Description**

TECHNICAL FIELD

Embodiments described herein relate to a power receiver, a power source and a wireless power transfer system.

BACKGROUND ART

Recently, wireless power transfer techniques for supplying power or charging a secondary battery have attracted attention. Research and development have been conducted on wireless power transfer systems (wireless power supply systems) wirelessly transferring power to, e.g., various electronic devices such as mobile terminals and notebook computers, electrical household appliances or power infrastructure equipment.

Incidentally, a magnetic field coupling method of employing coils to both of a power source and a power receiver has been generally used for a wireless power transfer method of wirelessly transferring power over several Watts class in a distance of several cm to several ten cm. The power transfer method using the magnetic field may be known as an electromagnetic induction method, and a magnetic field resonance method which is proposed by the United States MIT (Massachusetts Institute of Technology) in recent years.

Further, the electromagnetic induction method may be known as a Qi standard formulated by WPC (Wireless Power Consortium). Further, the magnetic field resonance method may be known as a WiPower formulated by A4WP (Alliance for Wireless Power).

Therefore, the magnetic field coupling method of employing coils to the power source and the power receiver may be realized for small-sized electronic devices of several Watts class in a commercialization phase, and may be standardized for home appliances using a target power of over 100 Watts. Further, a wireless power transfer technology of transferring power over several kilo-Watts for an electric vehicle has been researched and developed in the center of automobile manufacturers.

In these wireless power transfer systems, for the purpose of safety of heat generation or a condition optimization in efficiency, power may be transferred from a power source to a power receiver by using any communications technique between the power source and the power receiver in general.

Specifically, in the above described Qi standard, for example, in-band method for modulating an energy transfer waveform by controlling a connection of on/off at the power receiver side is adopted. Further, in the WiPower standard, for example, out-of-band scheme to both the power source and the power receiver is equipped with communication devices such as Bluetooth (registered trademark) to exchange information in both directions.

In this specification, a wireless power transferring (wireless power transfer) using magnetic field resonance will be explained as an example of the embodiments, however, the present embodiments described later in detail are not limited to apply the magnetic field resonance, but may be applied to a wireless power transfer using electric field resonance, or the like.

Conventionally, various wireless power transfer techniques for wirelessly supplying power have been proposed.

PRIOR ART DOCUMENTS

PATENT DOCUMENTS

Patent Document 1: Japanese Laid-open Patent Publication No. 2013-090483
Patent Document 2: Japanese Laid-open Patent Publication No. 2000-287375
Patent Document 3: Japanese Laid-open Patent Publication No. 2006-006948

Non-Patent Document 1: Andre KURS et al., "Wireless Power Transfer via Strongly Coupled Magnetic Resonances," SCIENCE Vol.317, pp.83-86, July 6, 2007
Non-Patent Document 2: Aristeidis KARALIS et al., "Efficient wireless non-radiative mid-range energy transfer," Cornel University Library, arXiv:physics/0611063v2 [physics.optics], (Journal-ref: Annals of Physics, vol.323, No.1, pp.34-48, January 2008)

SUMMARY OF THE INVENTION

PROBLEM TO BE SOLVED BY THE INVENTION

As described above, the wireless power transfer technique has been applied to electronic devices and home appliances, for example, including a portable terminal, in addition to an electric vehicle or the like. Further, a wireless power transfer technique has been sought for small sensors and small devices of several ten milliWatts class. The small sensors and the small devices may include various types of sensors embedded in a wall and medical devices mounted in the human body or the like.

Conventionally, for the sensors embedded in the wall and the medical devices mounted in the body or the like, a battery may be replaced at fixed intervals, and therefore, by taking into consideration the use of facilities and the burden on the human body, benefits of using a wireless power transfer technique may be very large.

Specifically, the sensors embedded in the wall and the medical devices mounted in the body or the like include a size restriction of a power receiver, and therefore, if it is possible to remove a communication circuit unit from the power receiver, a size or a consumption power of the receiver may be reduced.

However, when power is transferred to a plurality of power receivers at the same time, charging characteristics of secondary batteries in the plurality of power receivers may be different from each other, for example, by power receiving characteristics of respective power receivers. Therefore, if removing the communication circuit unit from the power receiver, it may be difficult to suitably charge the secondary battery of the respective power receivers. These problems are not only caused by the power transfer using magnetic field resonance or electric field resonance, but also by a power transfer using an electromagnetic induction or an electric field induction.

An object of this application is to provide a power receiver, a power source and a wireless power transfer system, in view of the problems described above, to simplify the wireless power transfer system, as well as the power receiver capable of reducing a size and a consumption power.

MEANS FOR SOLVING THE PROBLEM

According to one embodiment, there is provided a power receiver including a power receiver coil, a secondary battery, a load resistor, a switch, and a power receiver controller.

The power receiver coil wirelessly receives power from a power source, and the secondary battery is charged by power from the power receiver coil. The switch selectively connects the power receiver coil to the secondary battery or the load resistor. The power receiver controller controls the switch in accordance with a power supply state of the power source based on the power receiver coil, and a charged state of the secondary battery.

EFFECT OF THE INVENTION

The power receiver, the power source and the wireless power transfer system disclosed have an advantageous effect in that the wireless power transfer system may be simplified, and a size and a consumption power of the power receiver may be reduced.

BRIEF DESCRIPTION OF DRAWINGS

[FIG. 1] FIG. 1 is a block diagram schematically depicting an example of a wireless power transfer system.
[FIG. 2A] FIG. 2A is a diagram (1) for illustrating a modified example of a transmission coil in the wireless power transfer system of FIG. 1.
[FIG. 2B] FIG. 2B is a diagram (2) for illustrating a modified example of the transmission coil in the wireless power transfer system of FIG. 1.
[FIG. 2C] FIG. 2C is a diagram (3) for illustrating a modified example of the transmission coil in the wireless power transfer system of FIG. 1.
[FIG. 3] FIG. 3 is a block diagram schematically depicting the wireless power transfer system and an example of a power receiver.
[FIG. 4A] FIG. 4A is a diagram (1) for illustrating a first embodiment of a wireless power transfer system.
[FIG. 4B] FIG. 4B is a diagram (2) for illustrating the first embodiment of the wireless power transfer system.
[FIG. 4C] FIG. 4C is a diagram (3) for illustrating the first embodiment of the wireless power transfer system.
[FIG. 5] FIG. 5 is a diagram for explaining an impedance characteristic of a resonance coil of a power source.
[FIG. 6] FIG. 6 is a block diagram illustrating an example of a power receiver controller in the first embodiment of the wireless power transfer system.

[FIG. 7] FIG. 7 is a diagram illustrating signal waveforms of the power source and the power receiver in the first embodiment of the wireless power transfer system.

[FIG. 8] FIG. 8 is a flowchart for explaining an example of a power transfer process in the first embodiment of the wireless power transfer system.

[FIG. 9] FIG. 9 is a block diagram illustrating an example of a power receiver controller in a second embodiment of a wireless power transfer system.

[FIG. 10] FIG. 10 is a diagram illustrating signal waveforms of a power source and a power receiver in the second embodiment of the wireless power transfer system.

[FIG. 11] FIG. 11 is a flowchart for explaining an example of a power transfer process in the second embodiment of the wireless power transfer system.

[FIG. 12] FIG. 12 is a diagram for explaining a power receiver of a third embodiment of a wireless power transfer system.

## MODES FOR CARRYING OUT THE INVENTION

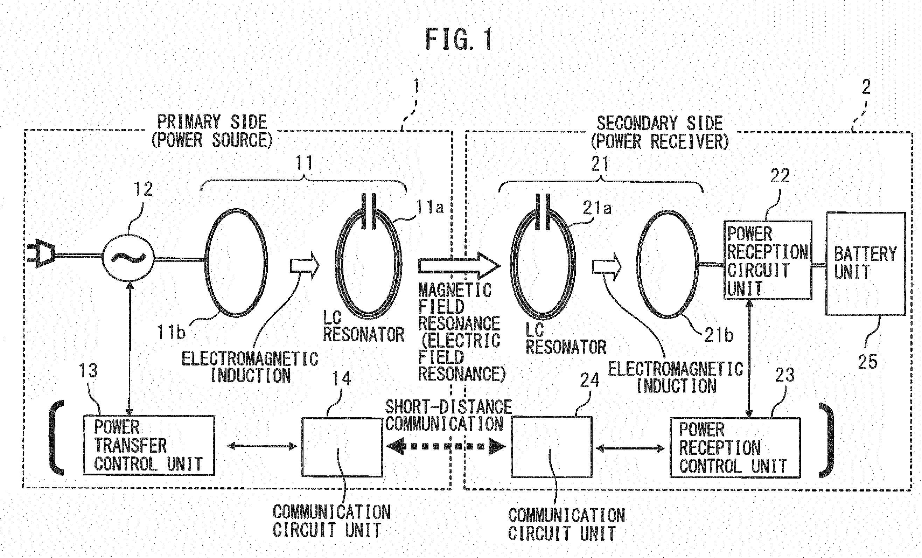

First, before describing embodiments of a power receiver, a power source and a wireless power transfer system in detail, examples of wireless power transfer systems (wireless power supply systems) will be described with reference to FIG. 1 to FIG. 3.

FIG. 1 is a block diagram schematically depicting an example of a wireless power transfer system including one power source and one power receiver. In FIG. 1, reference sign 1 denotes a power source (primary side: power source side), and reference sign 2 denotes a power receiver (secondary side: power receiver side).

As depicted in FIG. 1, power source (power source device) 1 includes a wireless power transfer unit (power source coil) 11, a high frequency power supply unit 12, a power transfer control unit 13, and a power source communication circuit unit 14. In addition, power receiver (power receiver device) 2 includes a wireless power receiver unit (power receiver coil) 21, a power receiver circuit unit (rectifier unit) 22, a power receiver control unit 23, and a power receiver communication circuit unit 24.

The wireless power transfer unit 11 includes a power supply coil 11b and a power source resonance coil 11a, and the wireless power receiver unit 21 includes a power receiver resonance coil 21a and a power extraction coil 21b.

As depicted in FIG. 1, the power source 1 and the power receiver 2 perform energy (electric power) transmission from the power source 1 to the power receiver 2 by magnetic field resonance (electric field resonance) between the power source resonance coil 11a and the power receiver resonance coil 21a. Power transfer from the power source resonance coil 11a to the c may be performed not only by magnetic field resonance but also electric field resonance or the like. However, the following description will be given mainly by way of example of magnetic field resonance.

The power source 1 and the power receiver 2 communicate with each other (near field communication) by the power source communication circuit unit 14 and the power receiver communication circuit unit 24. Note that, a distance of power transfer by the power source resonance coil 11a of power source 1 and the power receiver resonance coil 21a of power receiver 2 is set to be shorter than a distance of communication by the power source communication circuit unit 14 of power source 1 and the power receiver communication circuit unit 24 of power receiver 2.

In addition, power transfer by the power source resonance coil 11a and the power receiver resonance coil 21a is performed by a system (out-band communication system) independent from communication by the power source communication circuit unit 14 and the power receiver communication circuit unit 24.

Specifically, the power transfer performed by the power source resonance coil 11a and the power receiver resonance coil 21a uses, for example, a frequency band of 6.78 MHz, whereas communication performed by the power source communication circuit unit 14 and the power receiver communication circuit unit 24 uses, for example, a frequency band of 2.4 GHz.

The communication performed by the power source communication circuit unit 14 and the power receiver communication circuit unit 24 may use, for example, a DSSS wireless LAN system based on IEEE 802.11b or Bluetooth (registered trademark).

The above described wireless power transfer system performs power transfer using magnetic field resonance or electric field resonance by the power source resonance coil 11a of the power source 1 and the power receiver resonance coil 21a of the power receiver 2, for example, in a near field at a distance of about a wavelength of a frequency used. Accordingly, the range of power transfer (power transfer range) PR varies with the frequency used for power transfer.

The high frequency power supply unit 12 supplies power to the power supply coil 11b, and the power supply coil 11b supplies power to the power source resonance coil 11a arranged very close to the power supply coil 11b by using electromagnetic induction. The power source resonance coil 11a transfers power to the power receiver resonance coil 21a (the power receiver 2) at a resonance frequency that causes magnetic field resonance between the resonance coils 11a and 21a.

The power receiver resonance coil 21a supplies power to the power extraction coil 21b arranged very close to the power receiver resonance coil 21a, by using electromagnetic induction. The power extraction coil 21b is connected to the power receiver circuit unit 22 to extract a predetermined amount of power. The power extracted from the power receiver circuit unit 22 is used, for example, for charging a secondary battery 25, as a power supply output to the circuit (load) of power receiver 2, or the like.

Note that, the high frequency power supply unit 12 of power source 1 is controlled by the power transfer control unit 13, and the power receiver circuit unit 22 of power receiver 2 is controlled by the power receiver control unit 23. Then, the power transfer control unit 13 and the power receiver control unit 23 are connected via the power source communication circuit unit 14 and the power receiver communication circuit unit 24, and adapted to perform various controls so that power transfer from power source 1 to power receiver 2 may be performed in an optimum state.

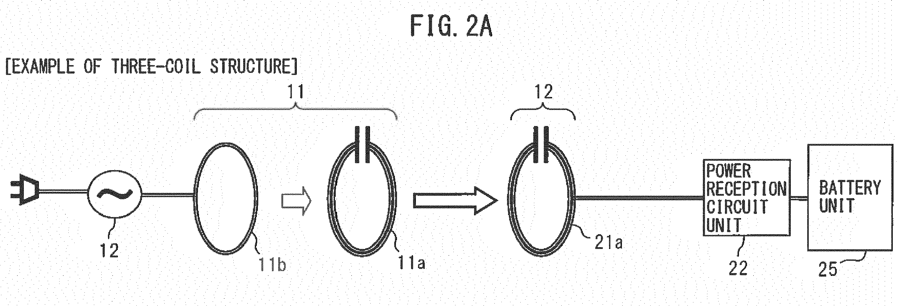

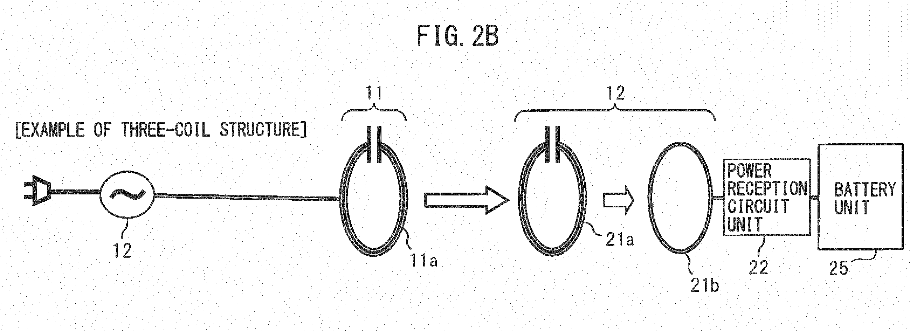

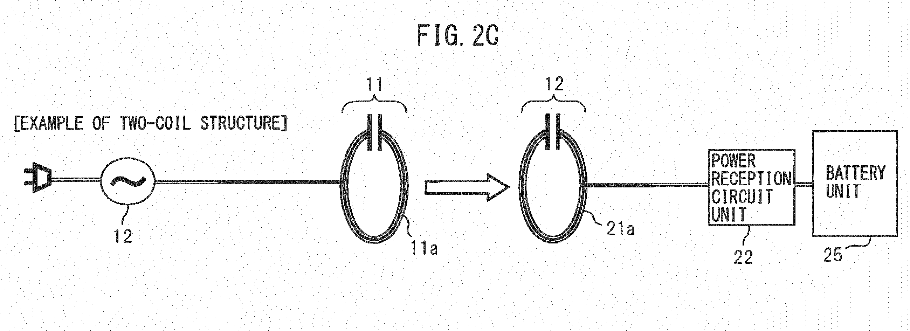

FIG. 2A to FIG. 2C are diagrams for illustrating modified examples of a transmission coil in the wireless power transfer system of FIG. 1. Note that, FIG. 2A and FIG. 2B depict exemplary three-coil structures, and FIG. 2C depicts an exemplary two-coil structure.

Specifically, in the wireless power transfer system depicted in FIG. 1, the wireless power transfer unit 11 includes the first coil 11b and the second coil 11a, and the wireless power receiver unit 21 includes the third coil 21a and the power extraction coil 21b.

On the other hand, in the example of FIG. 2A, the wireless power receiver unit (power receiver coil) 21 is set as a single coil (power receiver resonance coil: LC resonator) 21a, and in the example of FIG. 2B, the wireless power transfer unit (power source coil) 11 is set as a single coil (power source resonance coil: LC resonator) 11a.

Further, in the example of FIG. 2C, the wireless power receiver unit (power receiver coil) 21 is set as a single power receiver resonance coil 21a and the wireless power transfer unit (power source coil) 11 is set as a single power source resonance coil 11a. Note that, FIG. 2A to FIG. 2C are merely examples and, obviously, various modifications may be made.

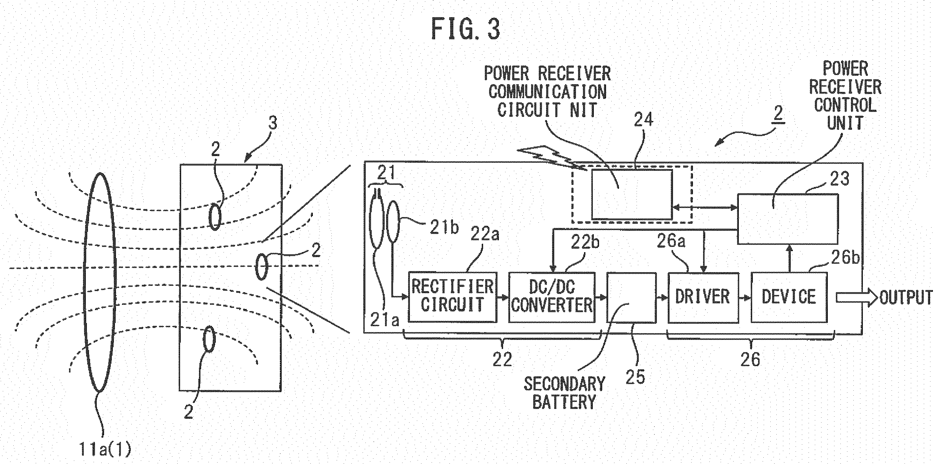

FIG. 3 is a block diagram schematically depicting the wireless power transfer system and an example of a power receiver, and illustrates the case wherein a power source resonance coil 11a (power source coil 11: power source 1) transfers power to a plurality of power receivers 2.

In FIG 3, a power receiver 2 is, for example, a medical device mounted on a body 3, specifically, a cardiac pacemaker inserted into a heart 3. Note that, the power receivers 2 may be temperature sensors embedded in a wall (3) or various types of sensors or micro devices that are sprayed on soil or the like.

As depicted in FIG. 3, the power receiver 2 includes a wireless power receiver unit (power receiver coil) 21, a power receiver circuit unit 22, a power receiver control unit 23, a power receiver communication circuit unit 24, a secondary battery 25, and a device unit 26.

The wireless power receiver unit 21 includes a power receiver resonance coil 21a and a power extraction coil 21b, and the power receiver circuit unit 22 includes a rectifier circuit 22a and a DC/DC converter 22b. The device unit 26 includes a driver 26a and a device 26b.

Note that, the power receiver 2 depicted in FIG. 3 is, for example, equivalent to the power receiver described with reference to above described FIG. 1. In FIG. 3, the power receiver circuit unit 22 depicted in FIG. 1 is divided and illustrated as the rectifier circuit 22a and the DC/DC converter 22b.

Further, in the power receiver 2 depicted in FIG. 3, the device unit 26 (driver 26a and device 26b) applied with output voltage of the secondary battery 25 is illustrated, but the power receiver 2 of FIG. 3 is substantially equivalent to that of FIG. 1. Note that, the power receiver communication circuit unit 24 of the power receiver 2 depicted in FIG. 3 is used to communicate with the power source communication circuit unit 14 of the power source 1 depicted in FIG. 1.

Incidentally, for example, by applying a wireless power transfer technique to medical devices attached to a human body or various types of sensors embedded in a wall, a burden on the human body may be reduced and a facility of operation may be improved. In the medical devices attached to the human body or the like, a constraint on size of the power receiver is large, and a consumption power is preferable as small as possible, by considering power supply frequency.

Therefore, after enabling wireless power transfer, if the communication circuit unit of the power receiver is simplified or removed, it is possible to reduce the size and the consumption power of the power receiver. This reduction of the consumption power may realize to suppress the size of the secondary battery, and is more preferable.

Note that, for example, even in the power transfer system for transmitting data from the sensors embedded in the wall to a host device by using wireless communication circuits, if removing the power receiver communication circuit unit used for a power receiving operation from the power receiver and retaining a wireless communication circuit for only transmitting data, the benefits of reducing the size and the consumption power may be expected.

Incidentally, for example, when simultaneously transferring power to a plurality of power receivers, secondary batteries of some power receivers may be reached to fully charged states and the other may be reached to fully charged states others are not reached to the fully charged states, in accordance with characteristic differences of respective power receivers.

Note that, the differences of charging characteristics of the secondary batteries are not only caused by manufacturing differences, but also caused by, for example, differences in the relative positional relationship and power transfer efficiency (power supply efficiency) between the power source and the power receiver, individual consumption powers of respective power receivers, and various kinds of matters.

Therefore, if no communication function is provided, it is difficult to detect the state of the power receivers and preferably control power transfer conditions by the power source. This problem is not limited to power transfer systems using magnetic field resonance or electric field resonance, but the problem may be caused in, for example, power transfer systems using electromagnetic induction and electric field induction.

Note that, the present embodiments to be described later are preferable to apply wireless power transfer system wherein the number of power receivers and positions of the power receivers with respect to the power source are substantially fixed, however, the present embodiments are not limited to apply such a wireless power transfer system.

Further, the power receiver to be applied the present embodiments is not limited to sensors embedded in a wall and medical devices mounted in a body or the like, and is not also limited to a device driven by a secondary battery.

Hereinafter, embodiments of a power receiver, a power source and a wireless power transfer system will be described in detail with reference to the accompanying drawings. In each of the embodiments to be described below, a power source coil (wireless power transfer unit) 11 and a receiver coil (wireless power receiver unit) 21 may be applied, for example, the various configurations described with reference to FIG. 2A to FIG. 2C.

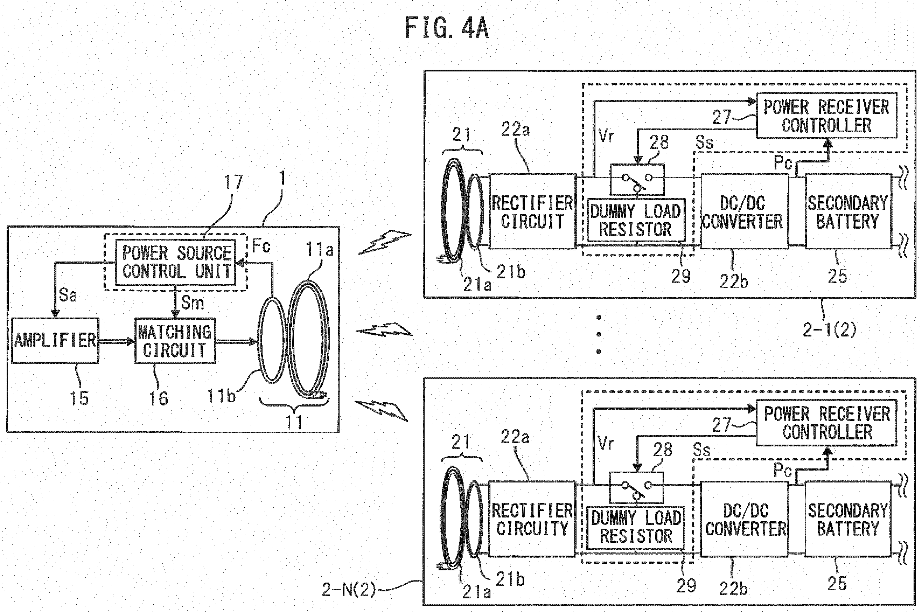

FIG. 4A to FIG. 4C are diagrams for illustrating a first embodiment of a wireless power transfer system. In FIG. 4A to FIG. 4C, references 1 denotes a power source, 2-1 to 2-N denotes power receivers, and all of the power receivers 2-1 to 2-N include the same configurations.

In the following descriptions, for simplicity, a first power receiver 2-1 and a N-th power receiver 2-N are mainly explained. Specifically, FIG. 4A illustrates the case that the first power receiver 2-1 and the N-th power receiver 2-N (for example, all of the power receivers 2-1 to 2-N) are normal states and in a test power transfer (mode).

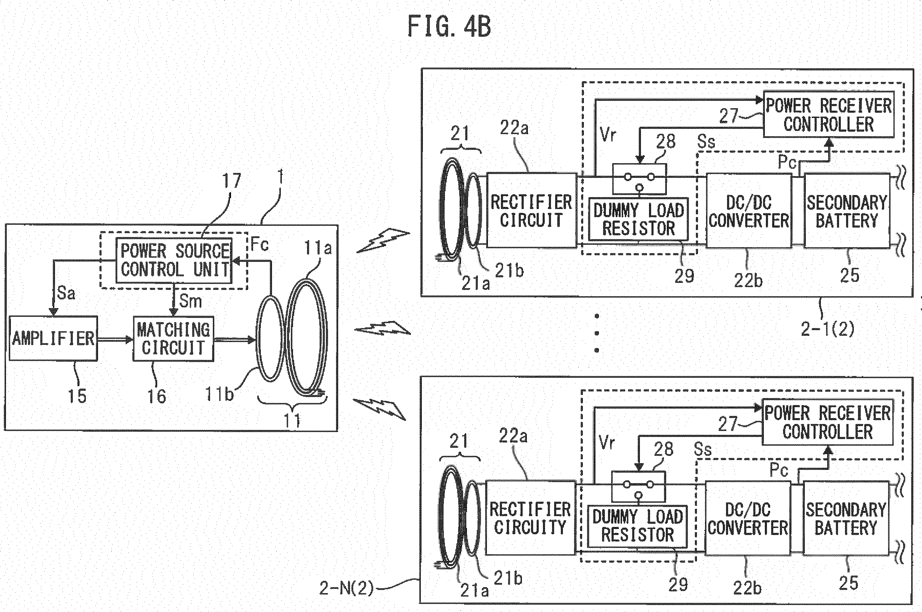

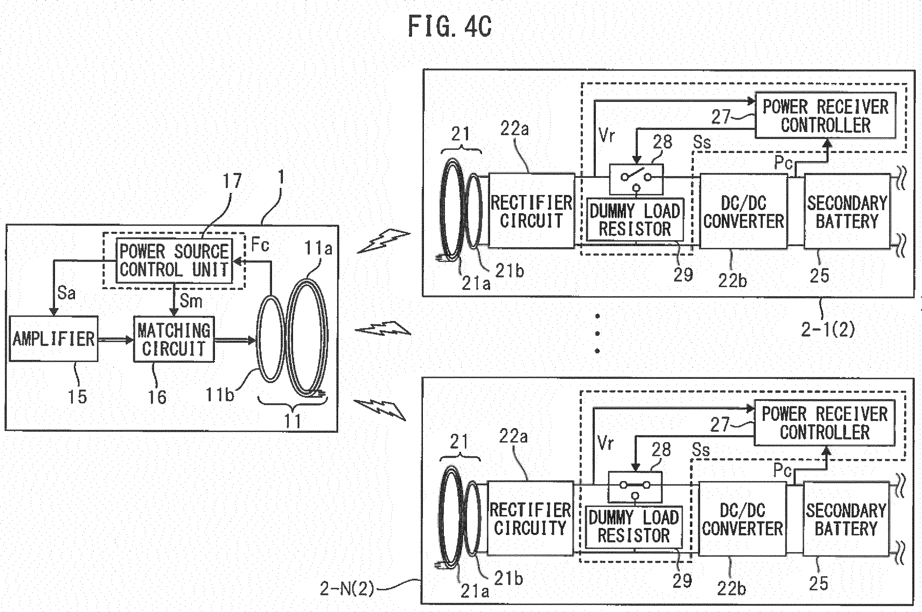

Further, FIG. 4B illustrates the case that the first power receiver 2-1 and the N-th power receiver 2-N (for example, all of the power receivers 2-1 to 2-N) are charging states. In addition, FIG. 4C illustrates the case that the first power receiver 2-1 is fully charged state and the N-th power receiver 2-N is a charging state, for example, one power receiver 2-1 is fully charged, and other power receivers 2-2 to 2-N are not fully charged and continued in charging states.

The power source 1 includes a wireless power transfer unit (power source coil) 11 including a power supply coil 11b and a power source resonance coil 11a, an amplifier 15, a matching circuit 16, and a power source control unit (including memory) 17.

In each power receiver 2 (each of the power receivers 2-1 to 2-N), a switch 28 selectively connects an output (received voltage Vr) of a rectifier circuit 22a to a dummy load resistor (load resistance) 29 or a DC/DC converter 22b in accordance with a switch control signal Ss from a power receiver controller 27.

The power receiver controller 27 receives the received voltage Vr from the rectifier circuit 22a and an output (charging power: power signal) Pc of the DC/DC converter 22b, and controls the switch 28 by the switch control signal Ss.

Specifically, in the power receiver 2 (2-1 to 2-N) of the wireless power transfer system of the first embodiment, a three terminal switch 28 is provided between the rectifier circuit 22a and the DC/DC converter 22b.

Based on switching operation of the switch 28, in a normal state (normally used state, and an initial state of the test power transfer), an output (received voltage Vr) of the rectifier circuit 22a is connected to the dummy load resistor 29, and in a full power transfer for charging a secondary battery 25, the output of the rectifier circuit 22a is connected to the DC/DC converter 22b.

Further, in the case that the secondary battery 25 is fully charged, the output of the rectifier circuit 22a is opened or connected to a high impedance resistor by the switch 28. Specifically, the switch 28 is controlled by the switch control signal Ss from the power receiver controller 27, and switching operations of the switch 28 may be performed suitable for respective operation phases.

Note that, the power receiver controller 27 monitors the charging power Pc of the receiving voltage Vr and the DC/DC converter 22b from the rectifier circuit 22a, to perform control by outputting a switch control signal Ss to the switch 28 ringing are. Incidentally, monitoring of the charging power Pc of the DC/DC converter 22b is actually may be monitoring the current so that a constant voltage output.

The power receiver controller 27, for example, may be used in combination with those used for the operation control of the sensors and devices provided in the power receiver 2, also, the dummy load resistor 29 is a known value (e.g., a secondary battery 25 in may be set to the impedance) during charging. However, for example, in a test transmission, to be suitable for the state detection of the power receiver 2, it is preferably avoided to set an extremely high value and low value.

The power source control unit 17, receives the waveform of the power source coil 11 (power supply coil 11b), and controls the output of the amplifier 15 by the amplifier control signal Sa, to control the switching of the matching circuit 16 by the matching control signals Sm.

That is, the power source control unit 17 monitors the voltage and current waveforms of the power supply coil 11b, and by referring to the information stored in the input impedance characteristic and the internal memory which is obtained from the result, the power receiving to be charged It has a function of determining the number of devices 2 and the like. Hereinafter, it will be described in detail with reference to FIG. 4A to FIG. 4C.

As depicted in FIG. 4A, when the first power receiver 2-1 and the N-th power receiver 2-N are normally used, in each power receiver 2 (2-1, 2-N), the switch 29 is connected to the dummy load resistor 29, and the connection between the switch 29 and the DC/DC converter 22b is cut-off.

Incidentally, the normal use state, the secondary battery 25 in the power receiver 2 is, for example, powered to the apparatus 26 described with reference to FIG. 3 (driver 26a and device 26b), predetermined processes are performed. The switch 29 in the power receiver 2 is the same connection state in the normal state and the initial state of the test power transfer.

On the other hand, the power source 1 is stopped when the respective power receivers 2 are normally used states, and when starting the charging, a full power transfer (mode) is established after starting a test power transfer mode, and power transfer (power supply) to the power receiver 2 may be performed.

That is, as depicted in FIG. 4A, in the power source 1, the power source control unit 17 controls the amplifier 15 by an amplifier control signal Sa so as to supply power for a test power transfer to the power source coil 11 (power supply coil 11b) via a matching circuit 16.

The power from the power source coil 11 (power source resonance coil 11a) is output to the power receiver coil 21 (power receiver resonance coil 21a) of the N power receivers 2-1 to 2-N. Note that, in the initial state of the test power transfer mode, the switch 29 of the power receiver 2 (2-1, 2-N) is connected to the dummy load resistor 29, and thus the received voltage Vr from the rectifier circuit 22a is applied to the dummy load resistor 29.

In the power source 1, when starting a test power transfer in the test power transfer mode, waveforms of the power source coil 11 (power supply coil 11b) are detected, and verified an impedance with the memory. Specifically, in the power source 1, the power source control unit 17 receives a coil waveform signal Fc from the power supply coil 11b, recognizes the number or the like of the power receivers 2-1 to 2-N by referring to an internal memory, establishes a full power transfer mode, and starts a full power transfer by a predetermined power.

Note that, the dummy load resistor 29 is, for example, set to a value such as corresponding to the impedance of the secondary battery 25. Further, an input impedance characteristics (amplitude or phase difference in the voltages, currents, etc.) obtained by waveforms (voltage waveforms or current waveforms) of the power supply coil 11b may be detected and referring to characteristics stored in the internal memory.

In each power receiver 2, when the power receiver controller 27 counts a predetermined fixed time from detecting the received voltage Vr output from the rectifier circuit 22a or when the received voltage Vr exceeds a predetermined threshold voltage, the connection of the switch 29 is changed from the dummy load resistor 29 to the DC/DC converter 22b.

Specifically, as depicted in FIG. 4B, in each power receiver 2, the connection of the switch 29 is switched from the dummy load resistor 29 to the DC/DC converter 22b, so that the received voltage Vr from the rectifier circuit 22a is applied to the DC/DC converter 22b.

Therefore, the power transfer to the power receiver 2, that is, the charging of the secondary battery 25 of the power receiver 2 is advanced, for example, the first power receiver 2-1 becomes fully charged, and the N-th power receiver 2-N is not fully charged and the charging state is continued.

Specifically, as depicted in FIG. 4C, for example, in the first power receiver 2-1 wherein the power receiver controller 27 detects the fully charged state by the charging power Pc, and the power receiver controller 27 controls the switch 28 to an open state (any of the dummy load resistor 29 and the DC/DC converter 22b is not connected).

Note that, for example, in the N-th power receiver 2-N, if the power receiver controller 27 judges that the fully charged state is not established by the charging power Pc, the switch 29 is controlled to connect the received voltage Vr from the rectifier circuit 22a to the DC/DC converter 22b so as to maintain the charging.

On the other hand, in the power source 1, the power source control unit 17 refers to the memory upon detecting a change in the waveforms by the coil waveform signal Fc from the power supply coil 11b, for example, to estimate the number of power receivers according to the charging target, and controls the amplifier control signal Sa and the matching control signal Sm.

Specifically, the power source control unit 17 controls an output of the amplifier 15 suitable for the estimated number of the power receivers and the switching of the matching circuit 16. Note that, the power source 1 stops an charging operation, or a power transfer operation, for example, if the number of estimated power receivers is equal to or less than a predetermined number or if the charging operation elapses a predetermined time.

Therefore, in each power receiver 2, for example, if the received voltage Vr from the rectifier circuit 22a is no longer detected, it is determined that the power transfer (charging) is completed, so that the switch 28 is connected to the dummy load resistor 29 and returned to a normal operation state.

As described above, in the present embodiment, before performing the full power transfer, a test power transfer wherein the dummy load resistor 29 for calibration including an impedance equivalent to the secondary battery 25 is connected is performed.

The characteristics required from the waveform of the test transmission time of the power source coil 11 (power supply coil 11b) (the input impedance, etc.) is detected, and matching the characteristics of the recorded power receiver in the memory. Then, for example, after a test transmission has passed a predetermined time, I do the transmission are switched to connect the secondary battery 25 of the switch 29 of the power receiver 2 (DC/DC converter 22b).

When the secondary battery is fully charged during normal power transmission, in the power receiver 2 (2-1), the charging path is opened by controlling the switch 28. In this case, the power source 1, the waveform of the power source coil 11 (power supply coil 11b) is changed according to the input impedance changes. Therefore, the number of secondary batteries 25 to be charged object (the number of powered devices for charging), is estimated by referring to the memory, and it is possible to appropriately perform the adjustments and switching of the transmission power and the matching circuit.

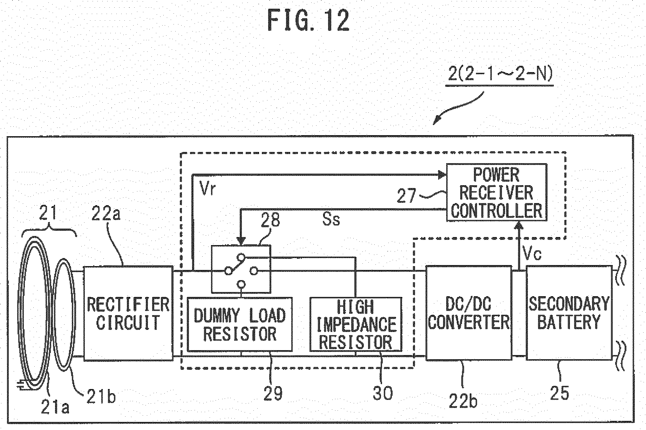

As will be described later with reference to FIG. 12, instead of opening the charging path by controlling the switch 28, the power receiver which is fully charged may be determined by connecting to a high-impedance resistance of which resistance value is previously known.

Further, in the application of the present embodiment, a wireless power transfer system may be preferable wherein the number of the power receivers 2 (2-1 to 2-n) and the locations thereof with respect to the power source 1 are fixed. Nevertheless, the application of the present embodiment is not limited to such a wireless power transfer system including predetermined number and locations of the power receivers.

According to the wireless power transfer system of the first embodiment, the power receiving communication circuit used for the power receiving operation is removed, and therefore, simplification of the wireless power transfer system, as well as reducing the size and consumption power of the power receiver may be possible. Note that this effect is exerted as well as in other embodiments.

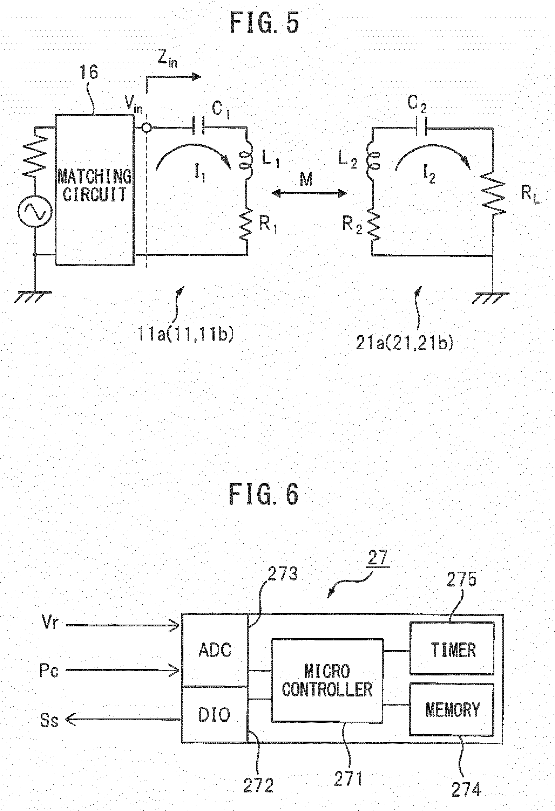

FIG. 5 is a diagram for explaining an impedance characteristic of a resonance coil of a power source, wherein the power source resonance coil 11a (power source coil 11, power supply coil 11b) and the power receiver resonance coil 21a (power receiver coil 21, power external coil 21b) are illustrated as equivalent circuits. Note that, an input impedance Zin is defined at an input port of the power source coil 11.

The references $C_1$, $L_1$, $R_1$ and $I_1$ denote equivalent values of capacitance, inductance, resistance and current of the power source resonance coil 11a, and references $C_2$, $L_2$, $R_2$ and $I_2$ denote equivalent values of capacitance, inductance, resistance and current of the power receiver resonance coil 21a. Further, references $R_L$ denotes a value of a load in the power receiver 2, Vin denotes an input voltage of a power source resonance coil 11a, and M denotes a transfer efficiency between the power source resonance coil 11a and the power receiver resonance coil 21a.

Note that, circuit equations with respect to the power source resonance coil 11a and the power receiver resonance coil 21a (power source and receiver coils) may be described below.

$$(R_1 + j\omega L_1 + 1/\omega C_1) \times I_1 + j\omega M I_2 = Vin$$

$$j\omega M I_1 + (R_2 + j\omega L_2 + 1/j\omega C_2 + R_L) \times I_2 = 0$$

In the above simultaneous equations, $I_1$ may be obtained, and thus input impedance Zin may be obtained by the following equation.

$$Zin = Vin/I_1 = (R_1 + j\omega L_1 + 1/\omega C_1) \times I_1 + (\omega M)^2/(R_2 + j\omega L_2 + 1/j\omega C_2 + R_L)$$

Therefore, in the power source 1, the impedance Zin may be calculated by measuring the input voltage Vin and the current $I_1$, for example, by comparing (referring to) contents of the memory provided in the power source control unit 17, it is possible to recognize various kinds of information in the power receiver 2.

Specifically, an right-hand side of the equation Zin includes the load $R_L$ of the power receiver 2 side, and thus Zin may be varied when a value of the load $R_L$ is changed. Note that, when the number of the power receiving coils 21 (power receiver resonance coils 21a: power sources) is increased, various kinds of information in the plurality of power receivers 2-1 to 2-N may be recognized from the impedances Zin.

FIG. 6 is a block diagram illustrating an example of a power receiver controller in the first embodiment of the wireless power transfer system. As depicted in FIG. 6, the power receiver controller 27 of the first embodiment includes a microcontroller 271, a digital input/output unit (DIO) 272, an analog-to-digital converter (ADC) 273, a memory 274 and a timer 275.

The ADC 273 receives a received voltage (analog value) Vr from a rectifier circuit 22a and a charging power (analog value) Pc from a DC/DC converter 22b, converts to a digital value, and outputs the digital value to the microcontroller 271.

The microcontroller 271 receives information from the memory 274 and the timer 275, and performs various controls. Note that, the DIO 272 receives a signal from the microcontroller 271, and outputs a switch control signal Ss to the switch 28.

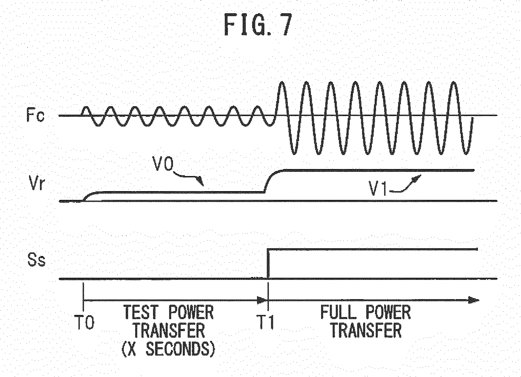

FIG. 7 is a diagram illustrating signal waveforms of the power source and the power receiver in the first embodiment of the wireless power transfer system. Note that references Fc denotes a waveform of the power source coil 11 (power supply coil 11b) of the power source 1, and Vr denotes an output voltage (received voltage) of the rectifier circuit 22a, and Ss denotes the switch control signal output from the power receiver controller 27 (microcontroller 271).

In the wireless power transfer system of the first embodiment, the microcontroller 271 of the power receiver controller 27 monitors the received voltage Vr input through the ADC 273, and switches to a full power transfer after starting a test power transfer by a predetermined time (X seconds).

For example, when the microcontroller 271 detects that a voltage level of the received voltage Vr becomes to V0, it is recognized that the test power transfer is started from time T0, and a time measurement is started by using the timer 275. Further, if the time measured by the timer 275 exceeds a predetermined X seconds, the microcontroller 271 controls the switch 28 by the switch control signal Ss.

Specifically, applying of the received voltage Vr from the rectifier 22a is switched from the dummy load resistor 29 to the DC/DC converter 22b, and charging of the secondary battery 25 (full power transfer) is performed. Note that, when the full power transfer is started, the voltage level of the received voltage Vr is changed from V0 of the test power transfer to a predetermined charging voltage V1.

Further, the microcontroller 271 monitors the charging power Pc and, for example, when detecting that the secondary battery 25 is fully charged, the microcontroller 271 controls the switch 28 by the switch control signal Ss so as to apply the received voltage Vr to the dummy load resistor 29.

Alternatively, the microcontroller 271 monitors the received voltage Vr and, for example, when detecting that the power source 1 stops power transfer, the microcontroller 271 controls the switch 28 by the switch control signal Ss so as to apply the received voltage Vr to the dummy load resistor 29.

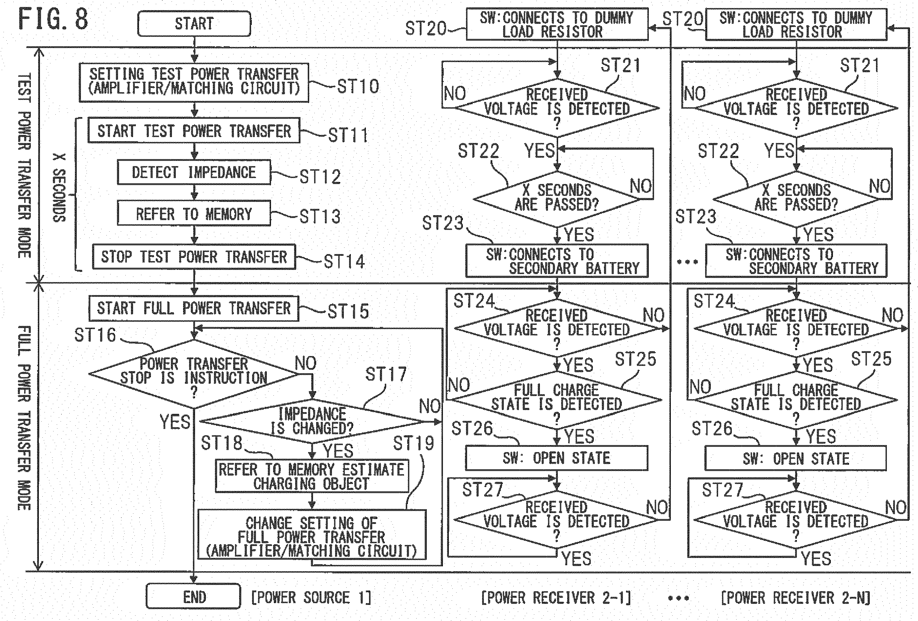

FIG. 8 is a flowchart for explaining an example of a power transfer process in the first embodiment of the wireless power transfer system. Note that, all of the power receivers 2-1 to 2-N perform the same processes, and therefore, in the following description, explanations will be focused on the power receiver 2-1.

First, the power receiver 2-1 (2-1 to 2-N) is used in a normal state, that is, in the case of consuming electric power stored in the secondary battery 25, the switch 28 connects the battery 25 to the dummy load resistor 29 (step ST20).

When a wireless power transfer process (charging process) is started, the power source 1 performs a test power transfer in a test power transfer mode so as to check whether or not power receivers 2-1 to 2-N are located in a predetermined area and in a predetermined number, before performing a full power transfer in a full power transfer mode (charging mode).

Specifically, in the test transfer mode, the power source 1 sets an output of the amplifier 15 and the matching circuit 16 to those of the test transfer mode in accordance with an instruction from the power source control unit 17 (step ST10), and starts the test power transfer (step ST11).

In this case, as described above, the power receiver 2-1 may perform a test power transfer of transferring a relatively small power between the power source 1, since the switch 28 connects to the dummy load resistor 29 in an initial state of the test power transfer.

Further, the power receiver 2-1 detects the received voltage Vr by using the power receiver controller 27 (step ST21: YES), and judges whether or not a predetermined received voltage (for example, voltage level V0 depicted in FIG. 7) is maintained during to pass predetermined X seconds (step ST22).

In the power receiver 2-1, when a predetermined received voltage is detected (step ST21: YES), and when this state is maintained over X seconds (step ST22: YES), the switch 28 connects to a DC/DC converter 22b (secondary battery 25).

In the power source 1, for example, the power source control unit 17 detects an impedance of the power supply coil 11b (step ST12), and confirms the power receivers 2-1 to 2-N by the detected impedance characteristics with reference to the memory (step ST13).

Specifically, in the power source 1 side, by monitoring the waveforms of the power supply coil 11b (wireless power transfer unit 11) with reference to memory information, and judging whether or not a predetermined number of power receivers are located in a predetermined area, the test power transfer may be stopped (step ST14).

Note that, in the test power transfer, relative small power transfer may be performed, however, a prescribed large electric power ($V^2/RL$) determined by a set output voltage (V) and a load (RL) may be transferred in the case of performing a full power transfer for transferring electric power via the DC/DC converter 22b to the secondary battery 25.

Further, even if the secondary battery 25 was already fully charged, it is easily performed to judge the number and the locations of the power receivers by monitoring the coil waveforms with reference to the memory information in the power source 1 side.

Note that, in the test power transfer mode, the power source 1 may be changed to the full power transfer mode when a predetermined time (X seconds) elapses. Further, in the power receiver 2-1 (2-1 to 2-N) the switch 28 is switched to the secondary battery 25 (DC/DC converter 22b) when a state of detecting a predetermined received voltage is maintained over X seconds.

Next, in the full power transfer mode, the power source 1 performs the setting of the amplifier 15 and the matching circuit 16 based on the results obtained in the test power transfer mode and starts the power transfer at a predetermined electric power (step ST15). Note that, the power source control unit 17 performs continuously the monitoring of the coil waveforms (waveforms of the power supply coil 11b).

On the other hand, in the power receiver 2-1, the switch 28 is switched to connect to the DC/DC converter 22b (secondary battery 25). Then, the power receiver controller 27 performs the monitoring of an output power (charging power) Pc of the DC/DC converter 22b (step ST24), and the monitoring of an output voltage (received voltage) Vr of the rectifier circuit 22a (step ST25).

If a fully charged state is detected by monitoring the charging power Pc (step ST25: YES), the switch 28 is opened (step ST26), specifically, the switch 28 is controlled so as not to connect to any of the DC/DC converter 22b and the dummy load resistor 29. After that, the monitoring of the received voltage Vr may be performed (the step ST27).

If a power transfer stop is detected by monitoring the received voltage Vr (step ST24, ST27: YES), the switch 28 is controlled to connect to the dummy load resistor 29 (step ST20), and is returned to the initial state.

Therefore, the power receiver controller 27 detects that the output power Pc of the DC/DC converter 22b becomes lower than a predetermined value, for example, if it the secondary battery 25 is turned around the fully charged state, the switch is opened (or connected to high impedance).

Note that, the power receiver controller 27, which detects a completion of the charged state of the secondary battery 25 by the output power Pc, the completion of the charged state is not limited to the state of full charged, and a predetermined charging rate (e.g., 80% of full charged state) may be detected to control the switch 28. These processes are performed independently in each of the power receiver 2-1 to 2-N.

Therefore, for example, a power receiver wherein a secondary battery 25 is full charged state and the switch is opened, and a power receiver wherein the switch 28 is controlled to connect to the DC/DC converter 22b and the charging of power is maintained may be both included.

In this way, in the power receivers 2-1 to 2-N, when the switch 28 is opened (or connected to high impedance), in the power source 1 side, changes in the waveforms of the coil (power supply coil 11b) may be appeared by changing the impedance (step ST17: YES).

The power source control unit 17 estimates a full charged power receiver (or a charging target power receiver continuously to be charged) with reference to the changed waveforms and the memory information (step ST18). Further, the power source control unit 17 outputs a control signal for controlling the switching of an output of the amplifier 15 and the matching circuit 16 in accordance with estimated results, and changes the setting of the full power transfer (step ST19).

Note that, in the power receivers 2-1 to 2-N wherein the switch 28 is opened by the full charged state (or high impedance connection), the received voltage Vr from the rectifier circuit 22a is continuously monitored, and when the power transfer stop is detected, a power transfer stop process may be performed (step ST16: YES).

That is, in the power transfer stop process, the power source 1 is, for example, interrupts the output of the amplifier 15 based on a stop instruction from an operator. Specifically, when the power transfer is stopped, the received voltage Vr from the rectifier circuit 22a of the power receiver 2-1 to 2-N is, for example, dropped to near zero volts (0V).

The power receiver controller 27 of the power receiver 2-1 to 2-N judges that the power transfer is stopped, when detecting a decrease of the received voltage Vr, the switch 28 is controlled to connect to the dummy load resistor, and is returned to the initial state (test power transfer mode).

Note that, with respect to the received voltage Vr from the rectifier circuit 22a, even though voltage values of a charging state (which connects to the DC/DC converter 22b) and a full charged state (which is opened or connected to a high impedance) are different, however, the received voltage Vr is commonly dropped to near 0V when the power transfer is stopped. Therefore, as described above, by setting the threshold to an appropriate value, no problems may be caused, even in the same operation flow.

Consequently, in the case of existing no communication means between the power source 1 and the power receivers 2-1 to 2-N, it may be possible to realize a stable wireless power transfer therebetween.

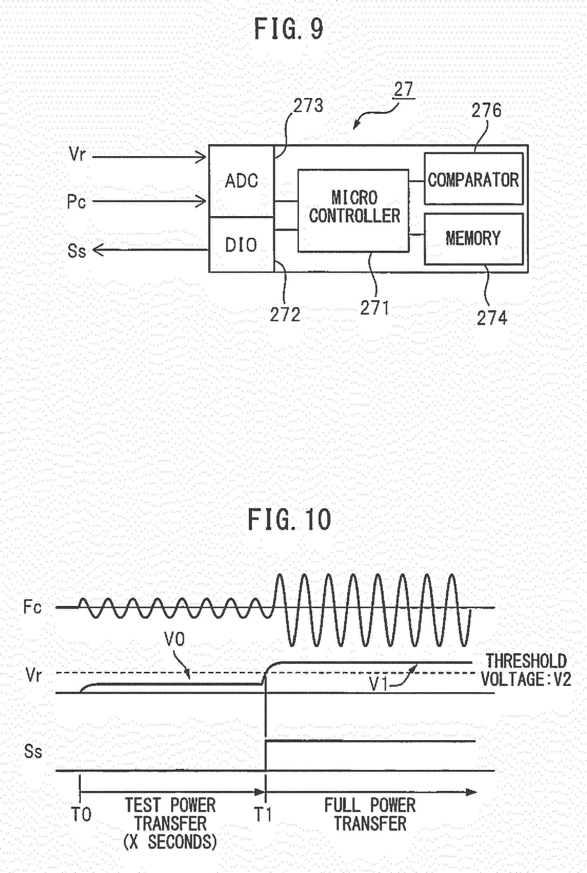

FIG. 9 is a block diagram illustrating an example of a power receiver controller in a second embodiment of a wireless power transfer system, and FIG. 10 is a diagram illustrating signal waveforms of a power source and a power receiver in the second embodiment of the wireless power transfer system.

As apparently depicted from a comparison of FIG. 9 and above described FIG. 6, a power receiver controller 27 of the second embodiment includes a comparator 276 in place of the timer 275 of the first embodiment. In the wireless power transfer system of the second embodiment, the microcontroller 271 of the power receiver controller 27 monitors the received voltage Vr input through the ADC 273, and compares the received voltage Vr by the comparator 276.

Specifically, when detecting the voltage level of the received voltage Vr is changed from a voltage V0 for the test power transfer to a voltage V1 for the full power transfer which exceeds a predetermined threshold voltage V2 by using the comparator 276, the switch 28 is controlled by the switch control signal Ss. Note that, the other processes are the same as those of the first embodiment, and the explanations thereof will be omitted.

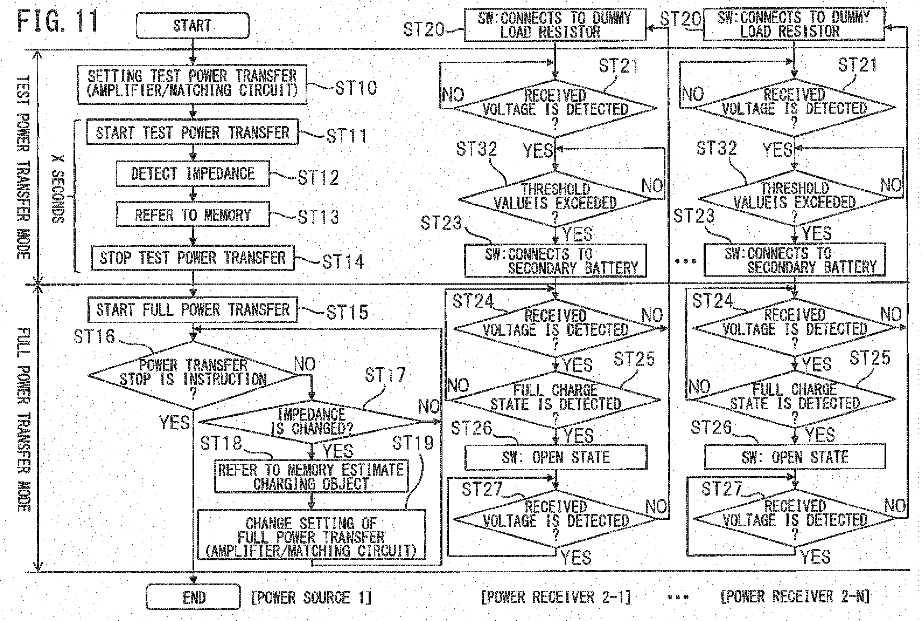

FIG. 11 is a flowchart for explaining an example of a power transfer process in the second embodiment of the wireless power transfer system. Note that, as apparently depicted from a comparison of FIG. 11 and above described FIG. 8, processes of the power source 1 are commonly performed in the first and second embodiments. Further, in the wireless power transfer system of the second embodiment, processes of the power receivers 2-1 to 2-N are the same as the processes of the first embodiment except that the process of step ST22 of the first embodiment is changed to a process of step ST32.

Specifically, in the power receiver 2-1, the power receiver controller 27 detects the received voltage Vr (step ST21: YES), and determines whether or not a voltage level of the received voltage Vr exceeds a predetermined threshold voltage (for example, a threshold voltage V2 depicted in FIG. 10) (step ST32).

That is, in the power receiver 2-1, it is judged that the received voltage Vr exceeds the threshold voltage (V2) (step ST32: YES), the switch 28 connects to the DC/DC converter 22b (secondary battery 25). The other processes are the same as those described with reference to FIG. 8, and the explanations thereof will be omitted.

As described above, in the wireless power transfer system of the second embodiment, the microcontroller 271 prepares the full power transfer by controlling the switch 28 to connect from the dummy load resistor 29 to the DC/DC converter 22b, when the voltage level of the received voltage exceeds the predetermined threshold voltage (V2).

FIG. 12 is a diagram for explaining a power receiver of a third embodiment of a wireless power transfer system. As depicted in FIG. 12, in the wireless power transfer system of the third embodiment, a switch 28 of a power receiver 2 (2-1 to 2-N) selects from a dummy load resistor 29, a DC/DC converter 22b and a high-impedance resistor 30, and connects the selected one to an output of a rectifier circuit 22a.

Specifically, in the first embodiment, as explained with reference to FIG. 4A to FIG. 4C, for example, when the secondary battery 25 is fully charged, the switch 28 is controlled to an open state (any of the dummy load resistor 29 and the DC/DC converter 22b are not connected).

In contrast, in the third embodiment, for example, when the secondary battery 25 is fully charged, the switch 28 is controlled to apply the received voltage Vr from the rectifier circuit 22a to the high-impedance resistor 30.

For example, by setting the high-impedance resistors 30 in respective power receivers to different values, the power source 1 may identify a power receiver that has been fully charged.

Note that, the high impedance resistor 30 of each of the power receivers 2-1 to 2-N may be set to a value which enables to identify a waveform of the power source coil 11 (power supply coil 11b) in the power source 1, when applying the received voltage Vr to the high impedance resistors 30. Specifically, resistance values of the high impedance resistors (power receiver identification resistors) 30 may be set, for example, as a resistance value of a first power receiver 2-1 is set to 1000Ω, a resistance value of a second power receiver 2-2 is set to 2000Ω, ....

In the above descriptions, a power transfer (transmission) using magnetic field resonance is mainly described, but the present embodiment is possible to apply a power transfer using electric field resonance or a power transfer using electromagnetic induction or electric field induced.

All examples and conditional language recited herein are intended for educational purposes to aid the reader in understanding the invention and the concepts contributed by the inventor for the development of technology.

All examples and conditional language recited herein are to be construed as being without limitation to such specifically recited examples and conditions, as well as the organization of such examples in the specification related to a showing of the superiority and inferiority of the invention.

In addition, although the embodiments of the present invention have been described in detail, it should be understood that the various changes, substitutions, and alterations could be made hereto without departing from the spirit and scope of the invention.

REFERENCE SIGNS LIST

1 Power source (primary side: power source side)
2, 2-1 to 2-N Power receiver (secondary side: power receiver side)
11 Wireless power transfer unit (power source coil)
11a power source resonance coil (LC resonator)
11b Power supply coil

12 High frequency power supply unit

13 Power transfer control unit

14 Power source communication circuit unit

15 Amplifier

16 Matching circuit

17 Power source control unit (memory)

21 Wireless power receiver unit (power receiver coil)

21a Power receiver resonance coil (LC resonator)

21b Power extraction coil

22 Power receiver circuit unit

22a Rectifier circuit

22b DC/DC converter

23 Power receiver control unit

24 Power receiver communication circuit unit

25 Secondary battery

26 Device unit

27 Power receiver controller

28 Switch (electrical switch)

29 Dummy load resistor

30 High impedance resistor

271 Microcontroller

272 Digital input/output unit (DIO)

273 Analog-to-digital converter (ADC)

274 Memory

275 Timer

276 Comparator

**Claims**

1. A power receiver comprising:

   a power receiver coil that wirelessly receives power from a power source;
   a secondary battery that is charged by power from the power receiver coil;
   a load resistor;
   a switch that selectively connects the power receiver coil to the secondary battery or the load resistor; and
   a power receiver controller that controls the switch in accordance with a power supply state of the power source based on the power receiver coil, and a charged state of the secondary battery.

2. The power receiver as claimed in claim 1, wherein the power receiver coil is a power receiver resonance coil wirelessly receiving the power from the power source by using magnetic field resonance or electric field resonance.

3. The power receiver as claimed in claim 1 or 2, wherein
   the power receiver controller controls the switch, in a full power transfer of charging the secondary battery by the power from the power source,

   so as to apply a received voltage generated by the power receiver coil to the secondary battery, when the secondary battery is chargeable, and
   so as not to apply the received voltage to any of the load resistor and the secondary battery, when a charging of the secondary battery is completed.

4. The power receiver as claimed in claim 3, wherein
   the power receiver controller controls the switch, in the full power transfer of charging the secondary battery by the power from the power source so as to apply the received voltage to a power receiver identification resistor including a specific resistance value for each power receiver, when the charging of the secondary battery is completed.

5. The power receiver as claimed in claim 3 or 4, wherein
   a case when the charging of the secondary battery is completed is a case when the secondary battery is fully charged.

6. The power receiver as claimed in any one of claims 3 to 5, wherein
the power receiver controller controls the switch, in an initial state of a test power transfer performed before the full power transfer and in a normal use state so as to apply the received voltage to the load resistor.

7. The power receiver as claimed in any one of claims 3 to 6, wherein
the full power transfer is started after a first time from starting the test power transfer, and
the power receiver controller recognizes the full power transfer by lapsing the first time during the received voltage is at a first voltage state in the test power transfer, and controls the switch so as to apply the received voltage to the secondary battery.

8. The power receiver as claimed in claim 7, wherein
the power receiver controller includes:

   a timer that counts a time from the test power transfer starts; and
   a microcontroller that controls the switch so as to apply the received voltage to the secondary battery, by using the timer with counting the first time from elapsing the test power transfer is started.

9. The power receiver as claimed in any one of claims 3 to 6, wherein
the full power transfer is started after a first time from starting the test power transfer,
the power receiver controller recognizes the full power transfer by the received voltage exceeding a threshold voltage located between a first voltage in the test power transfer and a second voltage in the full power transfer, and controls the switch so as to apply the received voltage to the secondary battery.

10. The power receiver as claimed in claim 9, wherein
the power receiver controller includes:

   a comparator that compares the received voltage and the threshold voltage; and
   a microcontroller that controls the switch so as to apply the received voltage to the secondary battery, when the received voltage exceeds the threshold voltage after starting the test power transfer by the comparator.

11. The power receiver as claimed in any one of claims 3 to 10, wherein the power receiver further comprises:

   a rectifier circuit that rectifies the power from the power receiver coil and outputs the received voltage; and
   a DC/DC converter that receives the received voltage and generates a power signal to charge the secondary battery, wherein

   the switch is provided between the rectifier circuit and the DC/DC converter.

12. The power receiver as claimed in claim 11, wherein
the microcontroller receives the received voltage and the power signal, and outputs a control signal to the switch.

13. The power receiver as claimed in any one of claims 1 to 12, wherein
a resistance value of the load resistor is determined in accordance with a resistance value of charging the secondary battery.

14. A power source including a power source coil that wirelessly transfers power to a plurality of power receivers, wherein each of the power receivers comprises:

   a power receiver coil that wirelessly receives power from a power source;
   a secondary battery that is charged by power from the power receiver coil;
   a load resistor;
   a switch that selectively connects the power receiver coil to the secondary battery or the load resistor; and
   a power receiver controller that controls the switch in accordance with a power supply state of the power source based on the power receiver coil, and a charged state of the secondary battery, and wherein
   the power source comprises:

      a power source controller that controls conditions of a full power transfer so as to start the full power transfer after a first time from starting a test power transfer is started, and recognizes a number of the power receivers to be charged in accordance with waveforms from the power source coil.

**15.** The power source as claimed in claim 14, wherein
the power source controller includes a memory that stores impedance characteristics of the power source coil, and recognizes the number of the power receivers to be charged in accordance with the waveforms from the power source coil with reference to information stored in the memory.

**16.** The power source as claimed in claim 14 or 15, wherein
each of the power receivers includes a power receiver identification resistor including a specific resistance value for the power receiver,
the power receiver controller controls the switch so as to apply a received voltage generated by the power receiver coil to the power receiver identification resistor, when a charging of the secondary battery is completed, and
the power source controller specifies the power receiver to be completed the charging of the secondary battery in accordance with changes of waveforms from the power source coil based on the power receiver identification resistor including the specific resistance value for the power receiver.

**17.** A wireless power transfer system comprising a power source and a plurality of power receivers wirelessly receiving power from the power source, wherein
each of the power receivers comprises:

a power receiver coil that wirelessly receives power from a power source;
a secondary battery that is charged by power from the power receiver coil;
a load resistor;
a switch that selectively connects the power receiver coil to the secondary battery or the load resistor; and
a power receiver controller that controls the switch in accordance with a power supply state of the power source based on the power receiver coil, and a charged state of the secondary battery, and wherein

the power source comprises:

a power source coil that wirelessly transfers power to the plurality of power receivers; and
a power source controller that controls conditions of a full power transfer so as to start the full power transfer after a first time from starting a test power transfer is started, and recognizes a number of the power receivers to be charged in accordance with waveforms from the power source coil.

# FIG.1

# FIG. 2A

[EXAMPLE OF THREE-COIL STRUCTURE]

# FIG. 2B

[EXAMPLE OF THREE-COIL STRUCTURE]

FIG. 2C

[EXAMPLE OF TWO-COIL STRUCTURE]

11

11a

12

21a

12

POWER RECEPTION CIRCUIT UNIT

22

BATTERY UNIT

25

FIG. 3

POWER RECEIVER CONTROL UNIT

POWER RECEIVER COMMUNICATION CIRCUIT UNIT

OUTPUT

DEVICE

DRIVER

DC/DC CONVERTER

RECTIFIER CIRCUIT

SECONDARY BATTERY

2

3

23

24

25

26

26a

26b

21

21a

21b

22

22a

22b

11a(1)

FIG. 4A

# FIG. 4B

FIG. 4C

EP 3 079 218 A1

# FIG. 5

$Z_{in}$

16

$V_{in}$

$C_1$

$L_1$

$I_1$

$R_1$

M

$C_2$

$L_2$

$I_2$

$R_2$

$R_L$

MATCHING CIRCUIT

11a(11,11b)

21a(21,21b)

# FIG. 6

27

273

275

Vr → ADC

Pc →

Ss ← DIO

MICRO CONTROLLER

TIMER

MEMORY

272

271

274

# FIG. 7

Fc

Vr    V0

V1

Ss

T0    TEST POWER
      TRANSFER
      (X SECONDS)

T1    FULL POWER
      TRANSFER

FIG. 8

EP 3 079 218 A1

# FIG. 9

# FIG. 10

FIG. 11

# FIG. 12

2(2-1～2-N)

21  22a

21a  21b

RECTIFIER CIRCUIT

Vr

28  Ss

POWER RECEIVER CONTROLLER  27

DUMMY LOAD RESISTOR  29

HIGH IMPEDANCE RESISTOR  30

DC/DC CONVERTER  22b

Vc

SECONDARY BATTERY  25

**EP 3 079 218 A1**

## INTERNATIONAL SEARCH REPORT

| | International application No. |
|---|---|
| | PCT/JP2013/082391 |

| A. CLASSIFICATION OF SUBJECT MATTER |
|---|
| *H02J17/00*(2006.01)i, *H02J7/00*(2006.01)i |

According to International Patent Classification (IPC) or to both national classification and IPC

| B. FIELDS SEARCHED |
|---|
| Minimum documentation searched (classification system followed by classification symbols) |
| H02J17/00, H02J7/00 |

| Documentation searched other than minimum documentation to the extent that such documents are included in the fields searched |
|---|
| Jitsuyo Shinan Koho            1922–1996   Jitsuyo Shinan Toroku Koho   1996–2014 |
| Kokai Jitsuyo Shinan Koho      1971–2014   Toroku Jitsuyo Shinan Koho   1994–2014 |

| Electronic data base consulted during the international search (name of data base and, where practicable, search terms used) |
|---|
| Thomson Innovation |

## C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2012-195993 A  (Nagano Japan Radio Co.,<br>Ltd.),<br>11 October 2012 (11.10.2012),<br>paragraphs [0028] to [0030], [0035], [0040]<br>(Family: none) | 1,2,13<br>14,17<br>3-12,15,16 |
| Y<br>A | JP 2010-178473 A  (Panasonic Corp.),<br>12 August 2010 (12.08.2010),<br>paragraphs [0036], [0046], [0073], [0081]<br>(Family: none) | 14,17<br>15,16 |
| Y<br>A | WO 2011/128969 A1  (Fujitsu Ltd.),<br>20 October 2011 (20.10.2011),<br>paragraphs [0127], [0128]<br>& US 2013/0026851 A1     & EP 2560266 A1<br>& CN 102823109 A        & KR 10-2012-0137405 A<br>& MX 2012011833 A | 14,17<br>15,16 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 January, 2014 (16.01.14) | 28 January, 2014 (28.01.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/082391

C (Continuation).   DOCUMENTS CONSIDERED TO BE RELEVANT

| Category* | Citation of document, with indication, where appropriate, of the relevant passages | Relevant to claim No. |
|---|---|---|
| A | US 2013/0134927 A1  (SAMSUNG ELECTRONICS CO., LTD.),<br>30 May 2013 (30.05.2013),<br>paragraphs [0045], [0055], [0056]<br>& KR 10-2013-0059697 A | 1-17 |
| A | WO 2012/064105 A2  (SAMSUNG ELECTRONICS CO., LTD.),<br>18 May 2012 (18.05.2012),<br>paragraph [0098]<br>& US 2012/0112554 A1    & KR 10-2012-0050011 A | 14-17 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013090483 A
- JP 2000287375 A
- JP 2006006948 A

**Non-patent literature cited in the description**

- **ANDRE KURS et al.** Wireless Power Transfer via Strongly Coupled Magnetic Resonances. *SCIENCE,* 06 July 2007, vol. 317, 83-86

- Efficient wireless non-radiative mid-range energy transfer. **ARISTEIDIS KARALIS et al.** Journal-ref: Annals of Physics. Cornel University Library, January 2008, vol. 323, 34-48